# EUROPEAN PATENT SPECIFICATION

(11) **EP 4 133 893 B1**
(45) Date of publication and mention of the grant of the patent: **24.12.2025**
(21) Application number: 21793260.7
(22) Date of filing: 20.04.2021
(51) Int. Cl.: H04W 76/14, H04W 92/18, H04W 72/02, H04W 72/25, H04W 72/40, H04W 72/563

(54) **RESOURCE ALLOCATION ENHANCEMENT FOR SIDELINK COMMUNICATION**
VERBESSERUNG DER RESSOURCENZUWEISUNG FÜR SIDELINK-KOMMUNIKATION
AMÉLIORATION DE L'ATTRIBUTION DE RESSOURCES POUR UNE COMMUNICATION DE LIAISON LATÉRALE

(30) Priority: 20.04.2020 WO PCT/CN2020/085708
(43) Date of publication of application: 15.02.2023
(73) Proprietor: MediaTek Singapore Pte. Ltd., Singapore 138628 (SG)
(72) Inventor: CHEN, Tao, Beijing 100015 (CN); TSAI, Lung-Sheng, Hsinchu City, 30078 (TW); WANG, Xuelong, Beijing 100015 (CN); LEI, Min, Beijing 100015 (CN)
(74) Representative: Patentship Patentanwaltsgesellschaft mbH
(86) International application number: PCT/CN2021/088393
(87) International publication number: WO 2021/213383

(56) References cited:
- WO-A1-2019/240548
- US-A1- 2020 029 340
- QUALCOMM INCORPORATED: "Sidelink Resource Allocation Mechanism for NR V2X", vol. RAN WG1, no. Reno, USA; 20191118 - 20191122, 9 November 2019 (2019-11-09), XP051823709, Retrieved from the Internet <URL:https://ftp.3gpp.org/tsg_ran/WG1_RL1/TSGR1_99/Docs/R1-1912946.zip R1-1912946_Sidelink Resource Allocation Mechanism for NR V2X.docx> [retrieved on 20191109]
- HUAWEI ET AL: "Remaining details of sidelink resource allocation mode 2", vol. RAN WG1, no. e-meeting ;20200224 - 20200306, 15 February 2020 (2020-02-15), XP052343299, Retrieved from the Internet <URL:https://ftp.3gpp.org/tsg_ran/WG1_RL1/TSGR1_100_e/Docs/R1-2000183.zip R1-2000183.docx> [retrieved on 20200215]
- MEDIATEK INC.: "On sidelink mode-2 resource allocation", 3GPP TSG RAN WG1 MEETING #97 R1-1906555, 17 May 2019 (2019-05-17), XP051708591
- QUALCOMM INCORPORATED: "Sidelink Resource Allocation Mechanism for NR V2X", 3GPP TSG-RAN WG1 #98BIS R1-1912946, 22 November 2019 (2019-11-22), XP051823709

## Description

### TECHNICAL FIELD

The disclosed embodiments relate generally to wireless communication, and, more particularly, to resource allocation enhancement for sidelink (SL) communication.

### BACKGROUND

5G radio access technology will be a key component of the modern access network. It will address high traffic growth and increasing demand for high-bandwidth connectivity. In 3GPP New Radio (NR), sidelink continues evolving. With new functionalities supported, the sidelink (SL) offers low latency, high reliability and high throughout for device-to-device communications. NR vehicle to everything (V2X) supports sidelink measurement. The V2X sidelink communication can be supported by unicast, groupcast, and broadcast. During sidelink establishment, the transmitting UE and the receiving UE performs discovery in Mode-1 or Mode-2. Resources are selected from a common resource pool configured by the network. The resource allocation for the sidelink communication is important. When a discovery failed on a selected resource, a new resource is selected. To support efficient sidelink communication, the sidelink needs to consider resource allocation for efficient discovery.

Improvements and enhancements are required resource allocation for sidelink communication.

Sidelink resource allocation mechanism is disclosed in Qualcomm Incorporated: "Sidelink Resource Allocation Mechanism for NR V2X", 3GPP TSG-RAN WG1 #98bis, 18 - 22 November 2019, USA.

### SUMMARY

The invention is defined by the appended independent claims and further embodiments are described by the dependent claims.

Apparatus and methods are provided for sidelink resource allocation in a NR network. In one novel aspect, the RX UE based sensing and resource allocation are provided. The RX UE based sensing work independently or jointly with the TX UE based sensing and resource allocation. In one embodiment, the RX UE performs sensing based on SCI decoding of the other UEs' SCI and measures RSRP on the demodulation reference signal (DMRS) of the PSCCH and/or the associated PSCCH/PSSCH. If the one or more reserved resources indicated in SCI from the peer TX UE are the same in the time domain and fully/partial overlapping in the frequency domain with the sensing resources reserved by the other UEs, the RX UE determines whether the reserved resources are acceptable based on sensing results derived from the measured RSRP results and a threshold. The RX UE indicates acceptability of the reserved resources to the TX UE. In one embodiment, the acceptability information carried with one additional bit multiplexing with an ACK/NACK (A/N) bit. In another embodiment, the acceptability information is not multiplexed with the A/N bit. In yet another embodiment, the acceptability information is transmitted on a feedback resource indicated in the received SCI.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless network for resource allocation enhancement for sidelink communication in accordance with embodiments of the current invention.
Figure 2 illustrates an exemplary NR wireless system with centralized upper layers of the NR radio interface stacks in accordance with embodiments of the current invention.
Figure 3 illustrates exemplary diagrams in comparing the TX UE based resource allocation with the resource allocation considering RX UE sensing for sidelink communication in accordance with embodiments of the current invention.
Figure 4 illustrates an exemplary flow diagram for the resource selection enhancement considering the RX UE sensing information in accordance with embodiments of the current invention.
Figure 5 illustrates exemplary diagrams for the sensing procedure for the sidelink resource allocation enhancement in accordance with embodiments of the current invention.
Figure 6 illustrates exemplary diagrams for the determining acceptability procedure for the sidelink resource allocation enhancement in accordance with embodiments of the current invention.
Figure 7 illustrates exemplary diagrams for the acceptability information reporting procedure for the sidelink resource allocation enhancement in accordance with embodiments of the current invention.
Figure 8 illustrates exemplary diagrams for the RX UE feedback timing for the sidelink resource allocation enhancement in accordance with embodiments of the current invention.
Figure 9 illustrates an exemplary flow chart for the sidelink resource allocation enhancement in accordance with embodiments of the current invention.

### DETAILED DESCRIPTION

Reference will now be made in detail to some embodiments of the invention, examples of which are illustrated in the accompanying drawings.

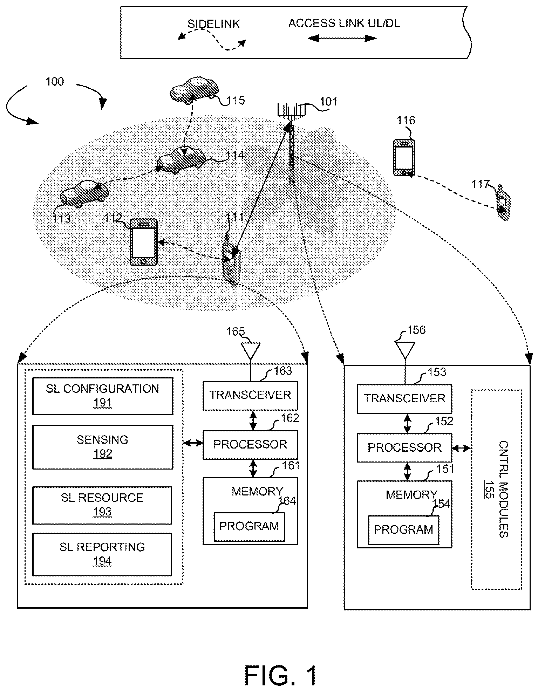

Figure 1 is a schematic system diagram illustrating an exemplary wireless network for resource allocation enhancement for sidelink communication in accordance with embodiments of the current invention. Wireless system 100 includes one or more fixed base infrastructure units forming a network distributed over a geographical region. The base unit may also be referred to as an access point, an access terminal, a base station, a Node-B, an eNode-B (eNB), a gNB, or by other terminology used in the art. The network can be a homogeneous network or heterogeneous network, which can be deployed with the same frequency or different frequency. gNB 101is an exemplary base station in the NR network.

Wireless network 100 also includes multiple communication devices or mobile stations, such as user equipments (UEs) 111, 112,113, 114, 115, 116, and 117. The exemplary mobile devices in wireless network 100 have sidelink capabilities. The mobile devices can establish one or more connections with one or more base stations, such as gNB 101. UE 111 has an access link, with uplink (UL) and downlink (DL), with gNB 101. UE 112, which is also served by gNB 101, may also establish UL and DL with gNB 101. UE 111 also establishes a sidelink with UE 112. Both UE 111 and UE 112 are in-coverage devices. Mobile devices on vehicles, such as mobile devices 113, 114, and 115, also have sidelink capabilities. Mobile device 113 and mobile device 114 are covered by gNB 101. Mobile device 113, an in-coverage device, establishes sidelink with mobile device 114, which is also an in-coverage device. Mobile device 115 on a vehicle, however, is an out-of-coverage device. In-coverage mobile device 114 establishes a sidelink with the out-of-coverage device 115. In other embodiments, the mobile devices, such as UE 116 and 117, may both be out-of-coverage but can transmit and receive data packets with another one or more other mobile stations with sidelink connections.

Figure 1 further illustrates simplified block diagrams of a base station and a mobile device/UE for resource allocation enhancement. gNB 101 has an antenna 156, which transmits and receives radio signals. An RF transceiver circuit 153, coupled with the antenna, receives RF signals from antenna156, converts them to baseband signals, and sends them to processor 152. RF transceiver 153 also converts received baseband signals from processor152, converts them to RF signals, and sends out to antenna 156. Processor 152 processes the received baseband signals and invokes different functional modules to perform features in gNB 101. Memory 151 stores program instructions and data 154 to control the operations of gNB 101.gNB 101also includes a set of control modules 155 that carry out functional tasks to communicate with mobile stations. These control modules can be implemented by circuits, software, firmware, or a combination of them.

UE111 has an antenna 165, which transmits and receives radio signals. An RF transceiver circuit 163, coupled with the antenna, receives RF signals from antenna165, converts them to baseband signals, and sends them to processor 162. In one embodiment, the RF transceiver may comprise two RF modules(not shown). A first RF module is used for HF transmitting and receiving, and the other RF module is used for different frequency bands transmitting and receiving, which is different from the HF transceiver. RF transceiver 163 also converts received baseband signals from processor162, converts them to RF signals, and sends out to antenna 165. Processor 162 processes the received baseband signals and invokes different functional modules to perform features in the UE 111. Memory 161 stores program instructions and data 164 to control the operations of the UE 111. Antenna 165 sends uplink transmission and receives downlink transmissions to/from antenna 156 of gNB 101.

The UE111 also includes a set of control modules that carry out functional tasks. These control modules can be implemented by circuits, software, firmware, or a combination of them. A sidelink configuration module 191 receives a sidelink configuration for an SL operation using an SL in the NR network. The sidelink configuration is configured by the network and/or pre-configured by the UE. A sensing module 192 performs sensing based on received sidelink control information (SCI) from a transmitting UE to obtain reference signal received powers (RSRP) measurement, wherein the received SCI includes a current resource at current time and one or more reserved resources for subsequent transmissions. A sidelink resource module 193 determines an acceptability for the one or more reserved resources for subsequent transmissions based on one or more results of the sensing. A sidelink reporting module 194 transmits acceptability information for the one or more reserved resources based on the determined acceptability to the transmitting UE.

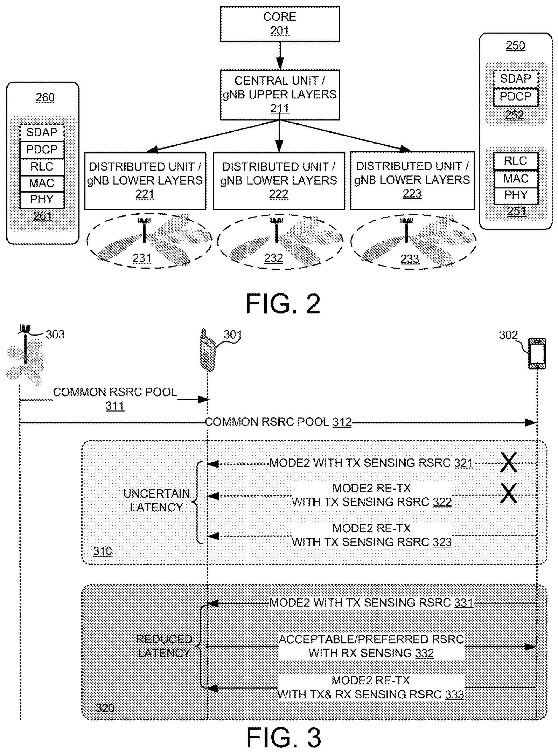

Figure 2 illustrates an exemplary NR wireless system with centralized upper layers of the NR radio interface stacks in accordance with embodiments of the current invention. Different protocol split options between central unit (CU) and distributed unit (DU) of gNB nodes may be possible. The functional split between the CU and DU of gNB nodes may depend on the transport layer. Low performance transport between the CU and DU of gNB nodes can enable the higher protocol layers of the NR radio stacks to be supported in the CU, since the higher protocol layers have lower performance requirements on the transport layer in terms of bandwidth, delay, synchronization and jitter. In one embodiment, SDAP and PDCP layer are located in the CU, while RLC, MAC and PHY layers are located in the DU. A Core unit 201 is connected with one central unit 211 with gNB upper layer 252. In one embodiment 250, gNB upper layer 252 includes the PDCP layer and optionally the SDAP layer. Central unit 211 is connected with distributed units 221, 222, and 221. Distributed units 221, 222, and 223 each correspond to a cell 231, 232, and 233, respectively. The DUs, such as 221, 222 and 223 include gNB lower layers 251. In one embodiment, gNB lower layers 251 include the PHY, MAC and the RLC layers. In another embodiment 260, each gNB has the protocol stacks 261,including SDAP, PDCP, RLC, MAC and PHY layers.

Figure 3 illustrates exemplary diagrams in comparing the TX UE based resource allocation with the resource allocation considering RX UE sensing for sidelink communication in accordance with embodiments of the current invention. In a NR network, a UE 301 and a UE 302 establishes Uu link with a gNB 303. At step 311, UE 301, the receiving (RX) UE receives resource configuration with common resource pool for sidelink from gNB 303. At step 312, UE 302, the transmitting (TX) UE receives resource configuration with common resource pool for sidelink from gNB 303. In one embodiment, TX UE 302 initiates a Mode-2 discovery by selecting a resource based on the TX UE sensing. A procedure 310 illustrates a TX UE only based resource allocation. At step 321, UE 302 sends a discovery, such as a mode-2 related, message with resource based on TX UE sensing. The discovery message failed. At step 322, TX UE 302 retransmit the discovery message. In one embodiment, TX UE 302 reselected a new resource based on the TX UE only. The second discovery message failed. At step 323, TX UE 302 retransmit the discovery message again. Since the TX UE relies only on its own result, the latency caused by the failed discovery messages or any other messages is uncertain. The TX UE needs to retry the message until it succeeds, or other conditions triggered.

In one novel aspect, for SL resource allocation, the Rx UE based sensing and resource allocation mechanism can be applied to improve the reliability and reduce the overall latency. In one embodiment, the RX UE based resource allocation work independently. In another embodiment, the RXUE based resource allocation applies jointly with TXUE based sensing and resource allocation mechanism. Procedure 320 illustrates the sidelink resource allocation considering RX UE sensing. At step 331, UE 302 sends a discovery, such as a mode-2 related, message with resource based on TX UE sensing. At step 332, RX UE 301 sends acceptability information to TX UE 302. The acceptability information is based on sensing performed by RX UE 301. At step 333, TX UE 302 sends another discovery message using the resource considering the acceptability information received from RX UE 301. In one embodiment, TX UE 302 reselects the resource only based on the RX UE sensing. In another embodiment, TX UE 302 reselects the resource based on both the RXUE sensing and the TX UE sensing. Procedure 320, in comparison with procedure 310 reduces the latency due to the reselection of the resources. The latency is more predictable in procedure 320.

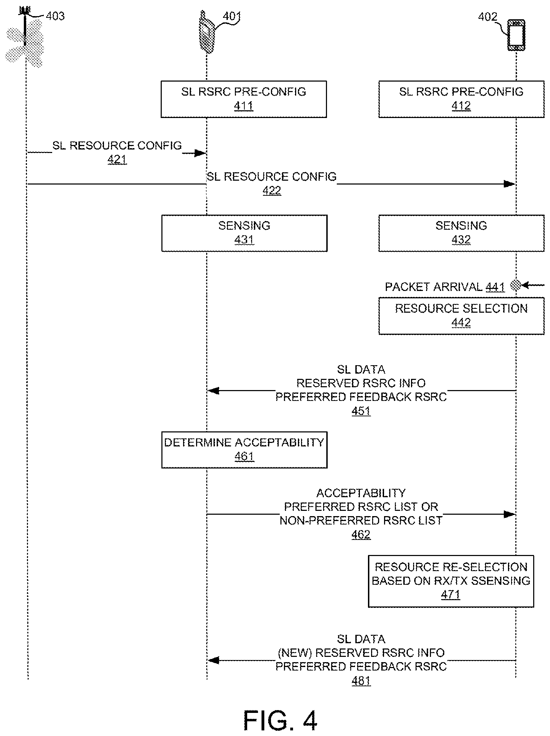

Figure 4 illustrates an exemplary flow diagram for the resource selection enhancement considering the RX UE sensing information in accordance with embodiments of the current invention. In a NR network, a UE 401 and a UE 402 establishes Uu link with a gNB 403. UE 401 and UE 402 are both configured with SL resources at steps 411 and 412, respectively. At step 421, UE 401, the receiving (RX) UE receives resource configuration with common resource pool for sidelink from gNB 403. At step 422, UE 402, the transmitting (TX) UE receives resource configuration with common resource pool for sidelink from gNB 403. RX UE 401 performs sensing bases on the received SL resource configuration at step 431. In one embodiment, the sensing is performed on one or more interfering peer UEs reserving one or more same resources indicated in the received SCI. In one embodiment, the sensing is performed on the current resource indicated in the SCI. In other embodiment, the sensing is performed on the one or more reserved resources indicated in the SCI. TX UE 402 performs sensing bases on the received SL resource configuration at step 432. At step 441, data packets arrive at TX UE 402 for transmission to RX UE 401. At step 442, TX UE 402 selects resources for sidelink transmission based on its own sensing. At step 451, TX UE 402 transmits to RX UE 401 using the selected sidelink resources. In one embodiment, the transmission includes sidelink data traffic, the current sidelink resource together with the reserved sidelink resources for subsequent transmissions and optionally preferred feedback resources for the RX UE to use.

At step 461, the RX UE 401 determines acceptability of sidelink resources. In one embodiment, the RSRP measurement is performed on the current resource indicated in the received SCI. The acceptability for the one or more reserved resources are determined based on the RSRP measurement of the current resource. The acceptability is determined to be unacceptable when the RSRP is greater than a predefined threshold. In other embodiments, the acceptability is further based on one or more other factors including an associated transmission priority of the current resource of the TX UE, an associated transmission priority of the one or more reserved resources of the TX UE, associated transmission priority of the one or more interfering peer UEs, and one or more RSRP measurements of the interfering peer UEs. In one embodiment, the RX UE determines the acceptability based on one or more factors including the RSRP on the resource used by the TX UE, the current and reserved resources indicated in the SCI received from the TX UE, the transmission priority of the TX UE, one or more sensing results from one or more interfering peer UEs with resources conflicting or the same as the one or more resources indicated in the SCI, the RSRP from the one or more interfering peer UEs, and corresponding transmission priority of the peer interfering UEs.

At step 462, RX UE 401 sends acceptability information to TX UE 402. In one embodiment, the acceptability information is a one-bit indicator indicating whether the reserved resource for the first subsequent time is acceptable. In another embodiment, the acceptability information includes a preference resource list or a non-preference resource list. At step 471, TX UE 402, upon determining the need to reselect sidelink resources, reselects sidelink resources considering the received acceptability information from RX UE 401. At step 481, TX UE 401 transmits to RX UE 401 using the re-selected resources. In one embodiment, the transmission includes the sidelink data traffic, the new/ updated reserved resource information and optionally preferred feedback resources for the RX UE to use.

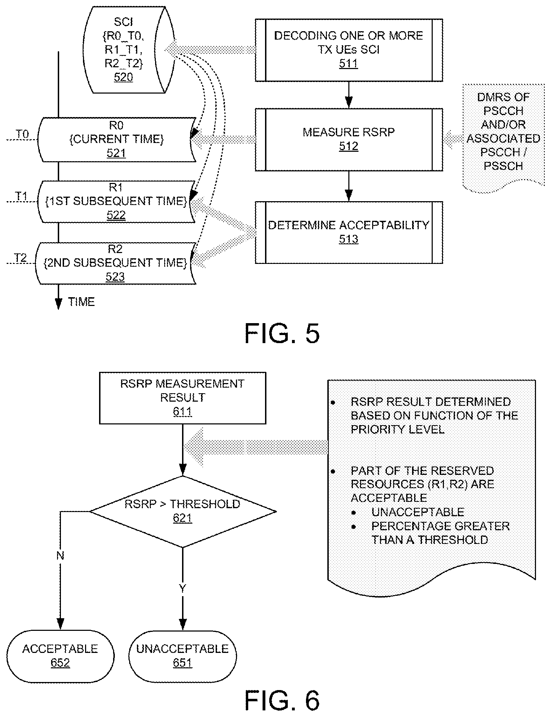

Figure 5 illustrates exemplary diagrams for the sensing procedure for the sidelink resource allocation enhancement in accordance with embodiments of the current invention. In one novel aspect, the sidelink resource allocation by the TX UE is based on the information of RX UE sensing. At step 511, the RX UE decodes one or more sidelink control information (SCI) from corresponding one or more TX UEs. RX UE performs sensing based on SCI decoding of the other UEs' SCI. The received SCI includes a current resource at current time and optionally one or more reserved resources for subsequent transmissions. In one embodiment, the SCI 520 from the TX UE includes {R0_T0, R1_T1, R2_T2}. R0 521 is the sidelink resource at current time T0. R1 522 is reserved sidelink resource at the first subsequent time T1. R2 is the reserved sidelink resource at the second subsequent time T2. In other embodiments, one or more the reserved resources are included in the TX UE SCI received by the RXUE. At step 512, the RX UE measures reference signal received powers (RSRP). In one embodiment, the RSRP measurement are performed on the DMRS of the physical sidelink control channel (PSCCH) and/or the associated PSCCH/ physical sidelink shared channel (PSSCH). If the reserved resource(s) indicated in SCI from the peer TX UE are same or overlapping with the sensing resources, at step 513, the RX UE will determine whether the reserved resources are acceptable based on sensing results derived from the measured RSRP results and a threshold. RX UE will indicate acceptability of the reserved resources to TX UE.

Figure 6 illustrates exemplary diagrams for the determining acceptability procedure for the sidelink resource allocation enhancement in accordance with embodiments of the current invention. The RSRP measurement is performed at the RX UE. At step 611, RX UE obtains results of the RSRP measurement. At step 621, RX UE determines if the obtained RSRP is greater than a threshold. In one embodiment, the threshold for comparison with RSRP results is determined based on the function of the priority level indicated in SCI by the other UEs and the priority level indicated in SCI from the peer TX UE. For example, if the measured RSRP on the sensing/reserved resource(s) is higher than a threshold corresponding to the certain relation of the priorities between the peer Tx UE and other Tx UE(s), the Rx UE will indicate the resource(s) is not acceptable. Otherwise, the Rx UE can indicate the resource(s) as acceptable.

If step 621 determines yes, RX UE determines the reserved resource is unacceptable at step 651. If step 621 determines no, RX UE determines the reserved resource is acceptable at step 652. In case of only part of reserved resources in the frequency domain are unacceptable, such as one or a few of the reserved sub-channels are unacceptable, the whole resources reserved in the frequency domain will be considered as "unacceptable". In another embodiment, a ratio of the unacceptable (or acceptable) resources over all resources in the frequency domain in the reserved slot(s) can be compared with a threshold to determine whether the resource(s) is acceptable. For example, if the unacceptable ratio is higher than the corresponding higher-band threshold, it will be considered as "unacceptable" resources; or if the acceptable ratio is lower than the corresponding lower-band threshold it will be considered as "unacceptable" resources. In yet another embodiment, the summed RSRP results from the multiple other TX UEs is used for comparison with a sum threshold to determine the acceptability of the reserved resources to be occupied by the multiple other TX UEs. Reference signal received quality (RSRQ) and/or received signal strength indicator (RSSI) can be used separately or jointly with RSRP for evaluation. In one embodiment, the threshold related to the acceptability determination is pre-configured for UEs. In another embodiment, the threshold related to the acceptability determination is configured via PC5-RRC between UEs or Uu RRC signaling between UE and BS.

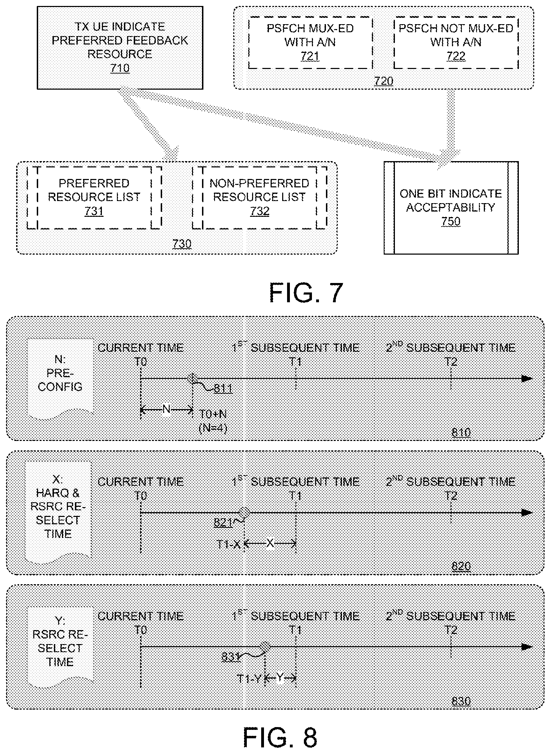

Figure 7 illustrates exemplary diagrams for the acceptability information reporting procedure for the sidelink resource allocation enhancement in accordance with embodiments of the current invention. Upon determining the acceptability, the RX UE sends the acceptability information to the TXUE. In one embodiment, the acceptability information 730 is a preferred resource list 731 and/or a non-preferred resource list 732. In one embodiment, for indication of the preferred and/or non-preferred resource list, the resource in time domain is indicated by a bitmap with one bit representing whether the resource(s) in the corresponding slot(s) is present within the total next/subsequent N slots. In another embodiment, a one-bit indicator 750 is used for the acceptability information.

In one embodiment 710, the acceptability information is sent to the TX UE based on one or more preferred feedback resources in the SCI, such as the 1^{st} SCI or the 2^{nd} SCI. The preferred feedback resources indicated in the received SCI can carry the preferred and/or non-preferred resource list 730. The preferred feedback resources indicated in the received SCI can also carry the one-bit indicator 750. In case of multiple feedback resources are indicated in 710, the RX UE selects one of them by considering the RX UE sensing results. In one embodiment, whether the feedback resource is included in the received SCI is dynamically configured. The received SCI includes an indicator for whether the feedback resource is included in the received SCI. In another embodiment, whether the feedback resource is included in the received SCI is pre-configured. In one embodiment, the RX UE indicates each resource acceptable or not in case of multiple reserved resources indicated in SCI by the peer TX UE, such as one bit in a bitmap indicates that one of the multiple reserved resources indicated in SCI is acceptable or not based on a mapping between the bit position and the reserved resource. In this case, the multiple bits can be carried with each bit corresponding to each reserved resource in SCI from TX UE for indication of the resource acceptability. Such acceptability feedback information is transmitted together with the channel carrying A/N, e.g., sequence based PSFCH channel or payload-based feedback channel, such as PUSCH/PSSCH type HARQ feedback channel. In another embodiment, the acceptability information is transmitted over SCI (1^{st} or 2^{nd} SCI) by RX UE w/wo A/N information.

In another embodiment 720, according to the present invention, the acceptability information is transmitted on physical sidelink feedback channel (PSFCH). In one embodiment 721, the acceptability information is carried with one additional bit multiplexing with an ACK/NACK (A/N) bit. In another embodiment 722, the acceptability information is not multiplexed with an A/N bit. In one embodiment, the Rx UE only indicates acceptability for the reserved first resource in SCI, i.e., using one bit to indicate the acceptability of the reserved first resource to be used for the next/first subsequent transmission in case of one or multiple resources reserved in SCI by TX UE. Such feedback information for resource acceptability is transmitted together with PSFCH or is carried in PSFCH with one more bit than the A/N bit. For example, in addition to one bit for A/N in PSFCH, one more bit is carried by PSFCH to indicate whether the reserved first subsequent resource is acceptable based on the sensing results at the RX UE. In another embodiment, the RX UE is configured or preconfigured with two A/N-pair resources. For example, the A/N-pair resource-1 represents "acceptable" and A/N-pair resource-2 represents "unacceptable" or vice versa. Due to the known time/frequency relation between the data transmission associated with SCI and corresponding PSFCH resources, the TX UE knows how to interpret the received acceptability indication for the corresponding reserved resources.

In one embodiment, upon reception of the acceptability indication or non-preferred resources, the TX UE performs the resource re-selection based on re-evaluation by excluding the unacceptable and/or non-preferred resources for the updated resource reservation and/or transmission. In one embodiment, for re-evaluation, the TX UE sensing results can be considered jointly for decision. In another embodiment, upon reception of the preferred resources, the TX UE performs the resource re-selection based on re-evaluation by prioritizing the resources preferred by the RX UE.

In one embodiment, if the sub-channel or sub-band, which comprises a set of sub-channels, channel state information (CSI) reports are supported, they can be reported only for the acceptable resources or subbands. If it is reported in SCI or physical layer channels, the reported CSI results can be associated with the acceptability information. In another embodiment, the sub-channel or sub-band CSI reports can be transmitted in the MAC CE or MAC header. For example, if the frequency resources are indicated as acceptable, the corresponding CSI reports would be attached. A bitmap or one bit can be used for indicating presence of CSI reports, e.g., one bit in the bitmap can represent the presence of CSI report in the corresponding sub-channel or sub-band. For the unacceptable resources, the bit for CSI report may be set to the value indicating the absence of the CSI report for the corresponding resources. This can save the signaling overhead for CSI (RI, PMI and/or CQI) report to avoid unnecessary CSI reporting.

Figure 8 illustrates exemplary diagrams for the RX UE feedback timing for the sidelink resource allocation enhancement in accordance with embodiments of the current invention. The RX UE upon determining the acceptability information, a feedback timing is determined to send the acceptability information. The feedback timing is configured with reference to the timing information in the received SCI including the current time T0, the next time or the first subsequent time T1, the second subsequent time T2. In embodiment 810, the acceptability information is multiplexed with the A/N. The feedback timing 811 is at T0+N wherein N is a number of timeslots. The one additional bit for acceptability information is at a predefined number of timeslots after the current time. In one embodiment, N=4. The feedback timing is set at T0+4 when the acceptability information is multiplexed with the A/N. In embodiment 820, the acceptability information is multiplexed with the A/N. The feedback timing 821 is at T1-X. X is the processing time considering HARQ preparation and resource re-selection and/or re-evaluation. The one additional bit for acceptability information is at a number of timeslots before a first subsequent transmission time, and wherein the number of timeslots is determined based on HARQ preparation processing time and resource reselection processing time. In embodiment 830, the acceptability information is not multiplexed with the A/N. The feedback timing 831 is at T1-Y. Y is the processing time considering resource re-selection and/or re-evaluation. The acceptability information is at a number of timeslots before a first subsequent transmission time, and wherein the number of timeslots is determined based on resource reselection processing time when the acceptability information is not multiplexed with an A/N bit.

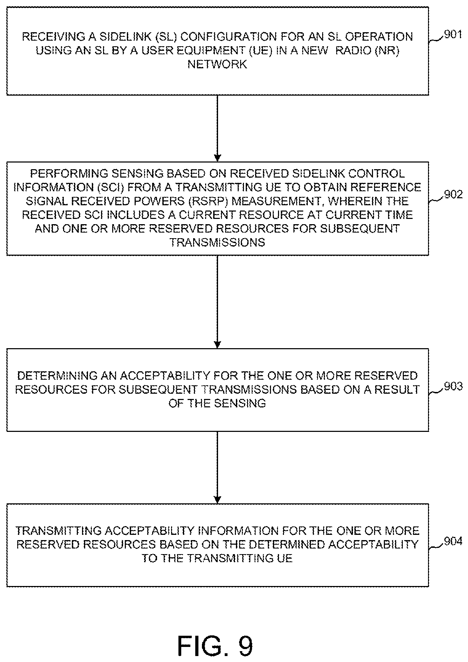

Figure 9 illustrates an exemplary flow chart for the sidelink resource allocation enhancement in accordance with embodiments of the current invention. At step 901, the UE receives a sidelink (SL) configuration for an SL operation using an SL in a wireless network. At step 902, the UE performs sensing based on received sidelink control information (SCI) from a transmitting UE to obtain reference signal received powers (RSRP) measurement, wherein the received SCI includes a current resource at current time and one or more reserved resources for subsequent transmissions. At step 903, the UE determines an acceptability for the one or more reserved resources for subsequent transmissions based on one or more results of the sensing. At step 904, the UE transmits acceptability information for the one or more reserved resources based on the determined acceptability to the transmitting UE.

## Claims

1. A method carried out by a user equiment, UE (111), comprising:
receiving (901) a sidelink, SL, configuration for an SL operation using an SL by the UE (111),
in a wireless network (100);
performing (902) sensing based on received sidelink control information, SCI, from a transmitting UE to obtain reference signal received powers, RSRP, measurement, wherein the received SCI includes a current resource at current time and one or more reserved resources for subsequent transmissions;
determining (903) an acceptability for the one or more reserved resources for subsequent transmissions based on one or more results of the sensing; and
transmitting (904) acceptability information for the one or more reserved resources based on the determined acceptability to the transmitting UE;
wherein the acceptability information is transmitted on physical sidelink feedback channel, PSFCH.

2. The method of claim 1, wherein the RSRP measurement is performed on the current resource indicated in the received SCI, and wherein the acceptability for the one or more reserved resources are determined based on the RSRP measurement of the current resource, and wherein the acceptability is determined to be unacceptable when the RSRP is greater than a predefined threshold.

3. The method of claim 1, wherein the sensing is performed on one or more interfering peer UEs reserving one or more same resources indicated in the received SCI.

4. The method of claim 3, wherein the acceptability is further based on one or more factors comprising an associated transmission priority of the current resource of the TX UE, an associated transmission priority of the one or more reserved resources of the TX UE, associated transmission priority of the one or more interfering peer UEs, and one or more RSRP measurements of the interfering peer UEs.

5. The method of claim 1, wherein the acceptability information carried with one additional bit multiplexing with an ACK/NACK, A/N, bit.

6. The method of claim 5, wherein the one additional bit for acceptability information is at a predefined number of timeslots after the current time.

7. The method of claim 5, the one additional bit for acceptability information is at a number of timeslots before a first subsequent transmission time, and wherein the number of timeslots is determined based on HARQ preparation processing time and resource reselection processing time.

8. The method of claim 1, wherein the acceptability information is at a number of timeslots before a first subsequent transmission time, and wherein the number of timeslots is determined based on resource reselection processing time when the acceptability information is not multiplexed with an A/N bit.

9. The method of claim 1, wherein the acceptability information is transmitted on a feedback resource indicated in the received SCI.

10. The method of claim 9, wherein the feedback resource is selected from a plurality of preferred feedback resources indicated in the received SCI based on the result of the sensing.

11. The method of claim 9, wherein the received SCI includes an indicator for whether the feedback resource is included in the received SCI.

12. The method of claim 1, wherein the acceptability information includes a preference resource list or a non-preference resource list.

13. A user equipment (111), UE, comprising:
a transceiver (163) configured to transmit and receive a radio frequency, RF, signal in a wireless network (100);
a sidelink configuration module (191) configured to receive a sidelink, SL, configuration for an SL operation using an SL in the wireless network (100);
a sensing module (192) configured to perform sensing based on received sidelink control information, SCI, from a transmitting UE to obtain reference signal received powers, RSRP, measurement, wherein the received SCI includes a current resource at current time and one or more reserved resources for subsequent transmissions;
a sidelink resource module (193) configured to determine an acceptability for the one or more reserved resources for subsequent transmissions based on one or more results of the sensing; and
a sidelink reporting module (194) configured to transmit acceptability information for the one or more reserved resources based on the determined acceptability to the transmitting UE;
wherein the acceptability information is transmitted on physical sidelink feedback channel, PSFCH.

14. The UE (111) of claim 13, wherein the RSRP measurement is performed on the current resource indicated in the received SCI, and wherein the acceptability for the one or more reserved resources are determined based on the RSRP measurement of the current resource and wherein the acceptability is determined to be unacceptable when the RSRP is greater than a predefined threshold.

15. The UE (111) of claim 13, wherein the acceptability information carried with one additional bit multiplexing with an ACK/NACK, A/N, bit.

16. The UE (111) of claim 15, wherein the one additional bit for acceptability information is at a predefined number of timeslots after the current time.

17. The UE (111) of claim 13, wherein the acceptability information is at a number of timeslots before a first subsequent transmission time, and wherein the number of timeslots is determined based on at least resource reselection processing time.

18. The UE (111) of claim 13, wherein the acceptability information is transmitted on a feedback resource indicated in the received SCI.

19. The UE (111) of claim 13, wherein the acceptability information includes a preference resource list or a non-preference resource list.

## Patentansprüche

1. Ein Verfahren, das von einem Benutzergerät, UE (111), ausgeführt wird, umfassend:
Empfangen (901) einer Sidelink-, SL-, Konfiguration für einen SL-Betrieb unter Verwendung eines SL durch das UE (111) in einem drahtlosen Netzwerk (100);
Durchführung (902) einer Erfassung basierend auf empfangener Sidelink-Steuerungsinformation, SCI, von einem sendenden UE, um Messung der empfangenen Referenzsignalleistungen, RSRP, zu erhalten, wobei die empfangene SCI eine aktuelle Ressource zum aktuellen Zeitpunkt und eine oder mehrere reservierte Ressourcen für nachfolgende Übertragungen enthält;
Feststellung (903) der Akzeptanz der reservierten Ressourcen für nachfolgende Übertragungen auf der Grundlage eines oder mehrerer Ergebnisse der Erfassung; und
Übermittlung von (904) Akzeptanzinformationen für die eine oder mehrere reservierte Ressourcen auf der Grundlage der ermittelten Akzeptanz für das sendende UE;
wobei die Akzeptanzinformationen über einen physikalischen Sidelink-Feedbackkanal, PSFCH, übertragen werden.

2. Das Verfahren nach Anspruch 1, wobei die RSRP-Messung an der in der empfangenen SCI angegebenen aktuellen Ressource durchgeführt wird, und wobei die Akzeptanz für die eine oder mehrere reservierte Ressourcen auf der Grundlage der RSRP-Messung der aktuellen Ressource bestimmt wird, und wobei die Akzeptanz als inakzeptabel eingestuft wird, wenn die RSRP einen vordefinierten Schwellenwert überschreitet.

3. Das Verfahren nach Anspruch 1, wobei die Erfassung an einem oder mehreren störenden Peer-UEs durchgeführt wird, die eine oder mehrere gleiche Ressourcen reservieren, die in der empfangenen SCI angegeben sind.

4. Das Verfahren nach Anspruch 3, wobei die Akzeptanz ferner auf einem oder mehreren Faktoren beruht, die Folgendes umfassen: eine zugehörige Übertragungspriorität der aktuellen Ressource des TX UE, eine zugehörige Übertragungspriorität der einen oder mehreren reservierten Ressourcen des TX UE, eine zugehörige Übertragungspriorität der einen oder mehreren störenden Peer-UEs und eine oder mehrere RSRP-Messungen der störenden Peer-UEs.

5. Das Verfahren nach Anspruch 1, wobei die Akzeptanzinformationen mit einem zusätzlichen Bit übertragen werden, das mit einem ACK/NACK-, A/N-Bit gemultiplext wird.

6. Das Verfahren nach Anspruch 5, wobei sich das zusätzliche Bit für die Akzeptanzinformationen an einer vordefinierten Anzahl von Zeitschlitzen nach dem aktuellen Zeitpunkt befindet.

7. Das Verfahren nach Anspruch 5, das zusätzliche Bit für die Akzeptanzinformationen befindet sich in einer Anzahl von Zeitschlitzen vor einem ersten nachfolgenden Übertragungszeitpunkt, und wobei die Anzahl der Zeitschlitze auf der Grundlage der HARQ-Vorbereitungsverarbeitungszeit und der Verarbeitungszeit für die Ressourcenneuauswahl bestimmt wird.

8. Das Verfahren nach Anspruch 1, wobei die Akzeptanzinformationen in einer Anzahl von Zeitschlitzen vor einem ersten nachfolgenden Übertragungszeitpunkt vorliegen, und wobei die Anzahl der Zeitschlitze auf der Grundlage der Verarbeitungszeit für die Ressourcenneuauswahl bestimmt wird, wenn die Akzeptanzinformationen nicht mit einem A/N-Bit gemultiplext werden.

9. Das Verfahren nach Anspruch 1, wobei die Akzeptanzinformationen über eine in der empfangenen SCI angegebene Feedback-Ressource übermittelt werden.

10. Das Verfahren nach Anspruch 9, wobei die Feedback-Ressource aus einer Vielzahl bevorzugter Feedback-Ressourcen ausgewählt wird, die in der empfangenen SCI angegeben sind, basierend auf dem Ergebnis der Messung.

11. Das Verfahren nach Anspruch 9, wobei die empfangene SCI einen Indikator dafür enthält, ob die Feedback-Ressource in der empfangenen SCI enthalten ist.

12. Das Verfahren nach Anspruch 1, wobei die Akzeptanzinformationen eine Liste bevorzugter Ressourcen oder eine Liste nicht bevorzugter Ressourcen umfassen.

13. Ein Benutzergerät (111), UE, umfassend:
einen Transceiver (163), der zum Senden und Empfangen eines Hochfrequenz-, RF-, Signals in einem drahtlosen Netzwerk (100) ausgebildet ist;
ein Sidelink-Konfigurationsmodul (191), das ausgebildet ist, eine Sidelink-, SL-, Konfiguration für einen SL-Betrieb unter Verwendung eines SL in dem drahtlosen Netzwerk (100) zu empfangen;
ein Sensormodul (192), das ausgebildet ist, auf der Grundlage empfangener Sidelink-Steuerinformationen, SCI, von einem sendenden UE, Erfassung der empfangenen Referenzsignalleistungen, RSRP, durchzuführen, wobei die empfangene SCI eine aktuelle Ressource zum aktuellen Zeitpunkt und eine oder mehrere reservierte Ressourcen für nachfolgende Übertragungen enthält;
ein Sidelink-Ressourcenmodul (193), das ausgebildet ist, die Akzeptanz einer oder mehrerer reservierter Ressourcen für nachfolgende Übertragungen auf der Grundlage eines oder mehrerer Ergebnisse der Erfassung zu bestimmen; und
ein Sidelink-Berichtsmodul (194), das ausgebildet ist, Akzeptanzinformationen für die eine oder mehrere reservierte Ressourcen auf der Grundlage der ermittelten Akzeptanz für das sendende UE zu übermitteln;
wobei die Akzeptanzinformationen über einen physikalischen Sidelink-Feedbackkanal, PSFCH, übertragen werden.

14. Das UE (111) nach Anspruch 13, wobei die RSRP-Messung an der in der empfangenen SCI angegebenen aktuellen Ressource durchgeführt wird, und wobei die Akzeptanz für die eine oder mehrere reservierten Ressourcen auf der Grundlage der RSRP-Messung der aktuellen Ressource bestimmt wird, und wobei die Akzeptanz als inakzeptabel eingestuft wird, wenn die RSRP einen vordefinierten Schwellenwert überschreitet.

15. Das UE (111) nach Anspruch 13, wobei die Akzeptanzinformationen mit einem zusätzlichen Bit übertragen werden, das mit einem ACK/NACK-, A/N-Bit gemultiplext wird.

16. Das UE (111) nach Anspruch 15, wobei sich das eine zusätzliche Bit für Akzeptanzinformationen an einer vordefinierten Anzahl von Zeitschlitzen nach dem aktuellen Zeitpunkt befindet.

17. Das UE (111) nach Anspruch 13, wobei die Akzeptanzinformationen zu einer Anzahl von Zeitschlitzen vor einem ersten nachfolgenden Übertragungszeitpunkt vorliegen, und wobei die Anzahl der Zeitschlitze auf der Grundlage mindestens der Verarbeitungszeit für die Ressourcenneuauswahl bestimmt wird.

18. Das UE (111) nach Anspruch 13, wobei die Akzeptanzinformationen über eine in der empfangenen SCI angegebene Feedback-Ressource übermittelt werden.

19. Das UE (111) nach Anspruch 13, wobei die Akzeptanzinformationen eine Liste bevorzugter Ressourcen oder eine Liste nicht bevorzugter Ressourcen umfassen.

## Revendications

1. Procédé mis en œuvre par un équipement utilisateur, UE (111), comprenant :
réception (901) d'une liaison latérale, SL, configuration pour une opération SL utilisant une SL par l'UE (111), dans un réseau sans fil (100) ;
effectuer (902) une détection basée sur les informations de contrôle de liaison latérale reçues, SCI, d'un UE émetteur pour obtenir les puissances reçues du signal de référence, RSRP, mesure, dans laquelle le SCI reçu comprend une ressource actuelle à l'instant actuel et une ou plusieurs ressources réservées pour les transmissions ultérieures ;
déterminer (903) l'acceptabilité d'une ou plusieurs ressources réservées pour les transmissions ultérieures en fonction d'un ou plusieurs résultats de la détection ; et
transmission (904) d'informations d'acceptabilité pour une ou plusieurs ressources réservées en fonction de l'acceptabilité déterminée pour l'UE émettrice ;
dans lequel les informations d'acceptabilité sont transmises sur le canal de retour d'information de liaison latérale physique, PSFCH.

2. Le procédé selon la revendication 1, dans lequel la mesure RSRP est effectuée sur la ressource actuelle indiquée dans le SCI reçu, et dans lequel l'acceptabilité d'une ou plusieurs ressources réservées est déterminée sur la base de la mesure RSRP de la ressource actuelle, et dans lequel l'acceptabilité est jugée inacceptable lorsque le RSRP est supérieur à un seuil prédéfini.

3. Le procédé selon la revendication 1, dans lequel la détection est effectuée sur un ou plusieurs UE homologues interférents réservant une ou plusieurs ressources identiques indiquées dans le SCI reçu.

4. Le procédé selon la revendication 3, dans lequel l'acceptabilité est en outre basée sur un ou plusieurs facteurs comprenant une priorité de transmission associée de la ressource actuelle de l'UE TX, une priorité de transmission associée d'une ou plusieurs ressources réservées de l'UE TX, une priorité de transmission associée d'un ou plusieurs UE homologues interférents et une ou plusieurs mesures RSRP des UE homologues interférents.

5. Le procédé selon la revendication 1, dans lequel les informations d'acceptabilité sont transportées avec un bit supplémentaire multiplexé avec un bit ACK/NACK, A/N.

6. Le procédé selon la revendication 5, dans lequel le bit supplémentaire d'information d'acceptabilité est situé à un nombre prédéfini d'intervalles de temps après l'heure actuelle.

7. Le procédé selon la revendication 5, le bit supplémentaire d'information d'acceptabilité est placé à un certain nombre d'intervalles de temps avant une première transmission ultérieure, et dans lequel le nombre d'intervalles de temps est déterminé en fonction du temps de traitement de préparation HARQ et du temps de traitement de resélection des ressources.

8. Le procédé selon la revendication 1, dans lequel les informations d'acceptabilité sont disponibles à un certain nombre d'intervalles de temps avant une première transmission ultérieure, et dans lequel le nombre d'intervalles de temps est déterminé en fonction du temps de traitement de resélection des ressources lorsque les informations d'acceptabilité ne sont pas multiplexées avec un bit A/N.

9. Le procédé selon la revendication 1, dans lequel les informations d'acceptabilité sont transmises sur une ressource de retour d'information indiquée dans le SCI reçu.

10. Le procédé selon la revendication 9, dans lequel la ressource de rétroaction est sélectionnée parmi une pluralité de ressources de rétroaction préférées indiquées dans le SCI reçu en fonction du résultat de la détection.

11. Le procédé selon la revendication 9, dans lequel le SCI reçu comprend un indicateur permettant de savoir si la ressource de rétroaction est incluse dans le SCI reçu.

12. Le procédé selon la revendication 1, dans lequel les informations d'acceptabilité comprennent une liste de ressources préférées ou une liste de ressources non préférées.

13. Un équipement utilisateur (111), UE, comprenant :
un émetteur-récepteur (163) configuré pour transmettre et recevoir un signal de radiofréquence, RF, dans un réseau sans fil (100) ;
un module de configuration de liaison latérale (191) configuré pour recevoir une configuration de liaison latérale, SL, pour une opération SL utilisant une SL dans le réseau sans fil (100) ;
un module de détection (192) configuré pour effectuer une détection basée sur les informations de contrôle de liaison latérale reçues, SCI, d'un UE émetteur pour obtenir les puissances de signal reçues de référence, RSRP, mesure, dans lequel le SCI reçu comprend une ressource actuelle à l'heure actuelle et une ou plusieurs ressources réservées pour les transmissions ultérieures ;
un module de ressources de liaison latérale (193) configuré pour déterminer l'acceptabilité d'une ou plusieurs ressources réservées pour les transmissions ultérieures en fonction d'un ou plusieurs résultats de la détection ; et
un module de rapport de liaison latérale (194) configuré pour transmettre des informations d'acceptabilité pour une ou plusieurs ressources réservées en fonction de l'acceptabilité déterminée pour l'UE transmettant ;
dans lequel les informations d'acceptabilité sont transmises sur le canal de retour d'information de liaison latérale physique, PSFCH.

14. L'UE (111) de la revendication 13, dans laquelle la mesure RSRP est effectuée sur la ressource actuelle indiquée dans le SCI reçu, et dans laquelle l'acceptabilité d'une ou plusieurs ressources réservées est déterminée sur la base de la mesure RSRP de la ressource actuelle et dans laquelle l'acceptabilité est jugée inacceptable lorsque le RSRP est supérieur à un seuil prédéfini.

15. L'UE (111) de la revendication 13, dans laquelle les informations d'acceptabilité sont transportées avec un bit supplémentaire multiplexé avec un bit ACK/NACK, A/N.

16. L'UE (111) de la revendication 15, dans laquelle le bit supplémentaire pour les informations d'acceptabilité est à un nombre prédéfini de créneaux horaires après l'heure actuelle.

17. L'UE (111) de la revendication 13, dans laquelle les informations d'acceptabilité sont à un certain nombre de créneaux horaires avant une première heure de transmission ultérieure, et dans laquelle le nombre de créneaux horaires est déterminé sur la base d'au moins le temps de traitement de resélection des ressources.

18. L'UE (111) de la revendication 13, dans laquelle les informations d'acceptabilité sont transmises sur une ressource de retour d'information indiquée dans le SCI reçu.

19. L'UE (111) de la revendication 13, dans laquelle les informations d'acceptabilité comprennent une liste de ressources préférées ou une liste de ressources non préférées.
